# EUROPEAN PATENT APPLICATION

(11) **EP 4 427 867 A1**
(43) Date of publication of application: **11.09.2024**
(21) Application number: 23160347.3
(22) Date of filing: 07.03.2023
(51) Int. Cl.: B22F 10/20, B22F 10/28, B22F 10/36, B33Y 70/00, B33Y 70/10

(54) **A METHOD FOR CONTROLLING THE DEPOSITION OF FUNCTIONAL METAL COMPONENTS WHEN USING METAL POWDER-POLYMER MATRIX FLEXIBLE FILMS**

(71) Applicant: The Provost, Fellows, Scholars and other Members of Board of Trinity College Dublin, Dublin 2 (IE)
(72) Inventor: Zhang, Wenyou, Dublin 4, D04 F658 (IE); Lupoi, Rocco, Dublin 15, D15 EA2K (IE); Padamati Babu, Ramesh, Dublin 15, D15 NR44 (IE); Sasnauskas, Arnoldas, Dublin 7 (IE); Abbott, William, Co. Meath, A83 YH52 (IE); Coban, Asli, Dublin 2 (IE)
(74) Representative: Purdylucey Intellectual Property

(57) **Abstract**

A method for improving deposition of metal powder in a three-dimensional printing process, the method comprising: (a) irradiating a metal powder-polymer matrix flexible film using a heat source to vaporise the polymer and melt the metal particles together to form a 2D layer; (b) placing the same or a new layer of the metal powder-polymer matrix flexible film on top of the previous 2D layer, and (c) repeating the application of the heat source for a number of cycles to produce the desired 3D product; wherein the heat source has a focal plane that converges beyond the metal powder-polymer matrix flexible film.

## Description

### Field of the Invention

The invention relates to a method of delivering powder for three-dimensional (3D) printing (Additive Manufacturing - AM) in powder bed machines such as Selective Laser Melting (SLM) in a controllable fashion.

### Background to the Invention

The earliest use of Additive Manufacturing (AM) was in rapid prototyping (RP) during the late 1980s and early 1990s. Prototypes allow manufacturers a chance to examine an object's design more closely and even test it before producing a finished product. RP allowed manufacturers to produce prototypes much faster than before, often within days or sometimes hours of conceiving the design. In RP, designers create models using computer-aided design (CAD) software, and then machines follow that software model to determine to the best way to construct the object. The RP concept has recently evolved to the principles of three-dimensional (3D) Printing (or AM), featuring important advantages over more conventional manufacturing such as design complexity, no tooling, product customization, limited waste, reduced inventory.

In conventional 3D printing powder bed machines, powder is delivered to the working area from large tanks or powder reservoirs, by spreading a powder layer (typically polymer or metal particles) using a blade or a roller over the working area. At this stage a laser (or an electron beam) will melt/consolidate a section of the layer. A new powder layer is then laid out as above and the process repeats until the full geometry of a part is formed. The powder layer thickness varies between 40 to 100µm approximately in each run.

When considering AM of metallic materials, there is no doubt that Powder Bed Fusion (PBF) processes, and in particular Selective Laser Melting (SLM), provides the most optimal combination of process flexibility, parts quality (low porosity, high geometrical accuracy, etc.) and materials capabilities. As an example, in SLM, powder is delivered to the working area from large tanks, and the particles are spread out using a blade or a roller over the working area. At this stage, a laser will melt/consolidate a section of the layer. A new powder layer is then laid out and the process repeats until the full geometry of a part is formed based on the details stored in an STL (stereolithography) file. The metal powder layer thickness (for each layer) varies between 40 to 100µm approximately. Large starting amounts of powder are always required, and despite the component size (small or large), the entire powder bed (or build plate) needs to be covered. This leads to a large quantity of powder stock material being required for the build, most of which is not converted into a part. For the unused powder to be reused it needs to be sieved and recycled after the print (small or large) is complete. Additionally, due to the nature of the blade spreading mechanism, the thickness of the powder bed is, in practice, not entirely uniform and subject to constant re-adjustments during the laser scans. This leads to critical process inconsistencies across the build platform and lends itself to process repeatability issues. Despite the labelling of a "first in class" process, the way powder is fed onto the bed area, and kept in place during the laser processing, has inherent process limitations that are challenging to solve.

Another process described in the art is the use of "powder sheets" or "metal powder-polymer matrix films or sheets "as feedstock material instead of using loose powder. Laser irradiation can consolidate each layer and a 3D part (or a coating) can be formed. This methodology was described, for example, in PCT Patent Application No. PCT/EP2020/053507.

With respect to focusing the laser during the melt or consolidation process, Metelkova et al. (Additive Manufacturing, vol. 23, pp. 161-169 (2018)) investigates laser beam focus shift, or "defocus", using a dynamic focusing unit, to change the focal position within the printing location. The authors describe that a positive defocus (the laser spot location is located above the latest printed layer) is beneficial for maximum build rate when loose powder is used.

It is an object of the subject application to overcome at least one of the above-mentioned problems.

### Summary of the Invention

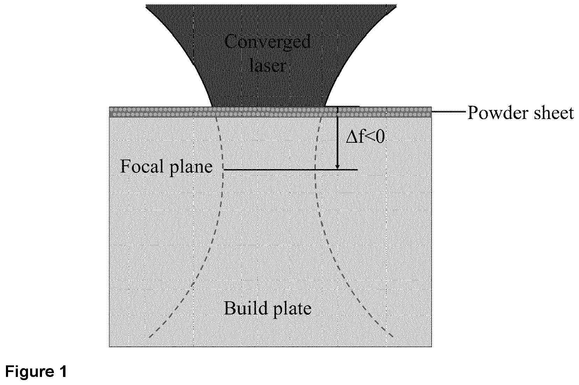

The claimed invention addresses the effect of negative "defocus" on the process and performance of printing three-dimensional objects using a metal powder-polymer matrix flexible film. The negative defocus refers to the focal plane of the laser beam being below the metal powder-polymer matrix flexible film bed (i.e., the virtual focal plane of the laser beam is interior the build plate or the previously solidified material), as shown in Figure 1.

This invention illustrates that a specific laser beam geometry, when using a metal powder-polymer matrix flexible film material, can result in maximum material being deposited per layer, leading to maximum productivity. Such optimum laser configurations are, for example:
- Processing laser type: fibre laser or CO2 laser or other laser type)
- Optimum laser power: >1W
- Focal spot size: between 1 and 400 microns
- Beam configuration: Converging, with the focal spot located below the metal powder-polymer matrix flexible film surface (typically from -0.5 to - 20 mm). Typically, the beam convergence point is between 1% of the metal powder-polymer matrix flexible film thickness and 30000% (30mm distance from the top surface assuming the sheet is 0.1mm thick) of the metal powder-polymer matrix flexible film thickness from the powder film surface.

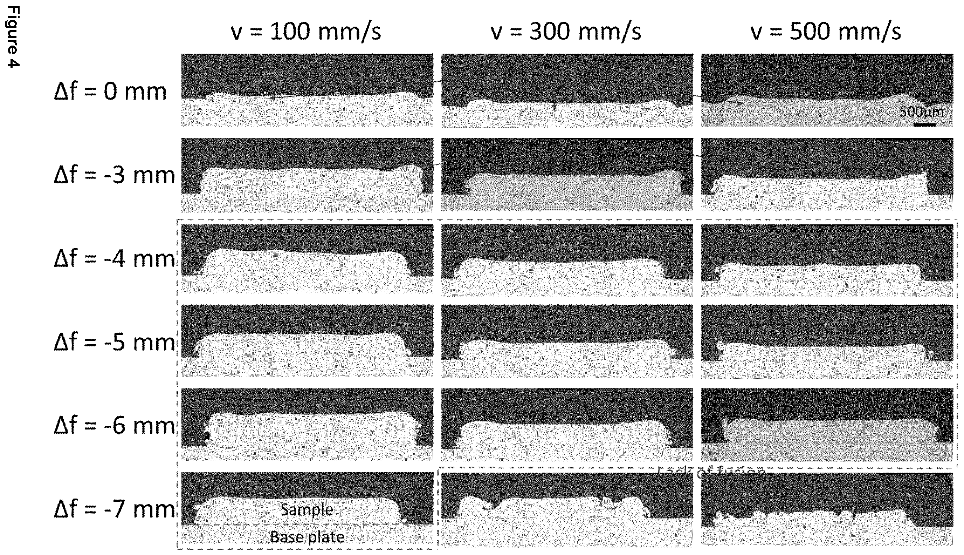

The lowest defocusing distance that the invention still works at is when the sample starts to visually degrade when compared to the other defocusing distances - this can be described as having a 'lack of fusion'. An example of this is shown in the cross-section images of Figure 4, where it is possible to identify at the least one area compatible with the definition of "lack of fusion". In this case, the reached temperature during the process is not enough to fully sinter the powder material, thus leading to geometric degradation.

The manufacture and use of a metal powder-polymer matrix flexible film in delivering metal powder to a three-dimensional printing process is described in PCT Patent Application No. PCT/EP2020/053507 (WO 2020/165193) at pages 9 to 17.

In one aspect, there is provided a method as set out in the appended claims.

In one aspect, there is provided a method for improving deposition of metal powder in a three-dimensional printing process, the method comprising: (a) irradiating a metal powder-polymer matrix flexible film using a heat source to vaporise the polymer and melt the metal particles together to form a 2D layer; (b) placing the same or a new layer of the metal powder-polymer matrix flexible film on top of the previously irradiated 2D layer, and (c) repeating the application of the heat source for a number of cycles to produce the desired 3D product; wherein the heat source has a focal plane that converges beyond or below the metal powder-polymer matrix flexible film.

In one aspect, the focal plane converges beyond the metal powder-polymer matrix flexible film at between about 1% to about 30000% of the thickness of the metal powder-polymer matrix flexible film.

In one aspect, the focal plane converges beyond the metal powder-polymer matrix flexible film at between about 5% to about 10000% of the thickness of the metal powder-polymer matrix flexible film.

In one aspect, the focal plane converges beyond the metal powder-polymer matrix flexible film at between about 10% to about 5000% of the thickness of the metal powder-polymer matrix flexible film.

In one aspect, the focal plane is between about -1.0 mm to about -10 mm beyond the metal powder-polymer matrix flexible film.

In one aspect, the heat source is selected from an infrared radiation device, a laser, an ion laser, an electron beam, an arc, or plasma. Preferably, the laser is selected from a CO₂ laser, a 1064 nm infrared Nd:YAG laser, an infrared fibre laser, a diode laser, an argon laser, a krypton laser, an argon/krypton laser, a helium-cadmium laser, a copper vapor laser, a xenon laser, an iodine laser, an oxygen laser, and an excimer laser. Ideally, the power output of the laser is greater than 1W.

In one aspect, the heat source scans the metal powder-polymer matrix flexible film at a velocity of between about 20mm/s to about 3m/s.

In one aspect, the metal powder-polymer matrix flexible film has a thickness of between about 20µm to about 500 µm.

In one aspect, the printing method is selected from the group comprising laser cladding, selective laser melting, selective laser sintering, wire cladding, Direct Energy Deposition (DED), ultrasonic additive manufacturing, and combinations thereof.

### Definitions

In the specification, the term "negative defocus" or "back-focusing" should be understood to mean where the focus of the laser converges behind or beyond the subject or object of interest being printed. In this instance, the negative defocus refers to the focal plane of the laser beam converging below the metal powder-polymer matrix flexible film bed (i.e., the virtual focal plane of laser beam is interior to the build plate or the previously solidified material), as shown in Figure 1. The laser beam convergence point is typically between about 1% of the metal powder-polymer matrix flexible film thickness and about 30000% (30mm distance from the top surface of the sheet, assuming the sheet is 0.1mm thick) of the metal powder-polymer matrix flexible film thickness from the exposed powder film surface. Preferably, the laser beam convergence point is typically between about 5% and about 25000% of the metal powder-polymer matrix flexible film thickness from the powder film surface; between about 10% and about 20000% of the metal powder-polymer matrix flexible film thickness from the powder film surface; between about 15% and about 15000% of the metal powder-polymer matrix flexible film thickness from the powder film surface; between about 20% and about 10000% of the metal powder-polymer matrix flexible film thickness from the powder film surface; between about 25% and about 9500% of the metal powder-polymer matrix flexible film thickness from the powder film surface; between about 30% and about 9000% of the powder sheet thickness from the powder film surface; between about 35% and about 8500% of the metal powder-polymer matrix flexible film thickness from the powder film surface; between about 40% and about 8000% of the metal powder-polymer matrix flexible film thickness from the powder film surface; between about 45% and about 7500% of the metal powder-polymer matrix flexible film thickness from the powder film surface; between about 50% and about 7000% of the metal powder-polymer matrix flexible film thickness from the powder film surface; between about 55% and about 6500% of the metal powder-polymer matrix flexible film thickness from the powder film surface; between about 60% and about 6000% of the metal powder-polymer matrix flexible film thickness from the powder film surface; between about 65% and about 5500% of the metal powder-polymer matrix flexible film thickness from the powder film surface; between about 70% and about 5000% of the metal powder-polymer matrix flexible film thickness from the powder film surface; between about 75% and about 4500% of the metal powder-polymer matrix flexible film thickness from the powder film surface; between about 80% and about 4000% of the metal powder-polymer matrix flexible film thickness from the powder film surface; between about 85% and about 3500% of the metal powder-polymer matrix flexible film thickness from the powder film surface; between about 90% and about 3000% of the metal powder-polymer matrix flexible film thickness from the powder film surface; between about 95% and about 2500% of the metal powder-polymer matrix flexible film thickness from the powder film surface; between about 96% and about 2000% of the metal powder-polymer matrix flexible film thickness from the powder film surface; between about 97% and about 1500% of the metal powder-polymer matrix flexible film thickness from the powder film surface; between about 98% and about 1000% of the metal powder-polymer matrix flexible film thickness from the powder film surface; between about 99% and about 900% of the metal powder-polymer matrix flexible film thickness from the powder film surface; between about 100% and about 800% of the metal powder-polymer matrix flexible film thickness from the powder film surface; between about 105% and about 700% of the metal powder-polymer matrix flexible film thickness from the powder film surface; between about 110% and about 600% of the metal powder-polymer matrix flexible film thickness from the powder film surface; between about 115% and about 500% of the metal powder-polymer matrix flexible film thickness from the powder film surface; between about 120% and about 400% of the metal powder-polymer matrix flexible film thickness from the powder film surface; between about 125% and about 300% of the metal powder-polymer matrix flexible film thickness from the powder film surface; between about 130% and about 200% of the metal powder-polymer matrix flexible film thickness from the powder film surface; and between about 135% and about 175% of the metal powder-polymer matrix flexible film thickness from the powder film surface.

In the specification, the term "sintering" should be understood to mean to coalesce into a solid or porous mass by means of heating without liquefaction. The term "sintering" or "sintered" is also understood to mean "welding" or "welded", respectively, and the terms can be used interchangeably.

In the specification, the term "matrix", in the context of the metal-polymer film matrix, should be understood to mean a strip of metal-polymer film formed by casting or extruding a polymer and metal particles together and being hot pressed.

In the specification, the term "flexible" should be understood to mean that the metal powder-polymer matrix film is capable of bending or flexing easily without breaking.

In the specification, the term "complex structures" should be understood to mean three-dimensional part geometries that cannot easily be manufactured using conventional methods such casting, machining, forging *etc.*

In the specification, the term "weldable metals" or "weldable thermoplastics (or weldable plastics)" should be understood to mean materials that can be joined together by applying a heat input at the contact interface, achievable also by the inclusion of fillers to facilitate the joining action. In cases where no filler material is added (resistance, electron beam, laser and some autogenous arc welding), the weld metal/thermoplastic has the same composition as the parent material. Where filler materials are added to the weld pool, the composition of the weld metal/thermoplastic (plastic) usually differs from that of the parent material. Examples of weldable metals are steel, stainless steel, titanium, titanium alloys (such as Ti64 or Ti grade 5 and 23), aluminium, aluminium alloys (such Al 6061 and Al 7075), copper, nickel, nickel alloys, super alloys (such as Inconel 625 and 718), high entropy alloys (such as FeCoNiCrMn), cobalt-chrome, barium and molybdenum. Examples of weldable plastics are epoxy, silicone, vulcanised rubber, polyester, polyurethane, polyethylene, polypropylene, polyvinylchloride (PVC), polyvinylidene fluoride (PVDF), fluoroplastics, polyetheramide (PEBA), polyether amide 2533, polylactic acid (PLA), polycaprolactone (PCL), polybutylene succinate (PBS), polyhydroxyalkanoate (PHA), polyacrylic acid (PAA), polyvinylpyrrolidone (PVP), and poly(3-hydroxybutyrate-co-3-hydroxyhexanoate). Other examples include ceramic-metal composites such as cemented tungsten carbide (WC-Co) and metal-diamond combinations and metal-alumina combinations, as well blends of polymers mentioned above.

In the specification, the term "build plate" or "metallic build plate" should be understood to mean a surface on which the metal-impregnated polymer sheet/composite is placed on to. The build plate is preferably of the same metal as the powder material, as that will maximise the weldability of the metal-polymer composite. However, the invention is also for multi-material printing, thus combinations of different metals are also possible.

In the specification, the term "polymer sheet architecture" should be understood to mean the structural features of the polymer sheet which accommodate the insertion of the metal particles within the polymer sheet itself.

In the specification, the term "integrated" or "embedded" should be understood to mean, in the context of the metal-polymer film matrix, where a metal particle is integrated with or embedded in the architecture of the polymer sheet.

In the specification, the term "extrusion" should be understood to mean a process used to create an article of a fixed cross-sectional profile, where the material making up the article is pushed through a die of the desired cross-section. The process can be done with material that is hot or cold.

In the specification, the term "melt pool morphology" should be understood to mean when at any given time in a metal additive manufacturing process, the volume of material that is exposed to rapid melting when the energy beam, usually a laser or electron beam, moves across the top of the material. The melt pool morphology is the dimension of width and depth, geometry, and shape of the melt pool.

In the specification, the term "keyhole mode" should be understood to mean a deep and narrow melt pool, when the laser beam is moved across the top surface of the powder bed. This mode occurs at a higher energy density than the conduction mode (defined below).

In the specification, the term "lack of fusion" should be understood to mean poorly welded material which occurs when the achieved temperature during the irradiation process is not high enough to fully sinter the powder material required to produce a consolidated part.

In the specification, the term "conduction mode" should be understood to mean a shallow melt pool, when the laser beam is moved across the top surface of the powder bed. This mode occurs at a lower energy density than the keyhole mode described above.

In the specification, the term "theory thickness" should be understood to mean the distance between the doctor blade and the base plate during the metal powder-polymer matrix flexible film casting process, which also equates to the thickness of the metal-polymer mixture solution before evaporation of the solvent (such as chloroform or acetone). The theory thickness will be thicker than the actual metal powder-polymer matrix flexible film.

### Brief Description of the Drawings

The invention will be more clearly understood from the following description of an embodiment thereof, given by way of example only, with reference to the accompanying drawings, in which:-
**Figure 1** illustrates a laser beam with a negative defocus.
**Figure 2** shows optical micrographs of polished cross sections showing geometry and density of 30-layer samples printed by using different positive defocus distances: +2 mm (a); +4 mm (b) and +6 mm (c).
**Figure 3** illustrates a series of images (a) and (b). and a graph (c) showing the characterisations of spherical 304 stainless steel powder and metal powder-polymer matrix flexible film: A scanning electron microscope (SEM) image is shown in (a), the powder size distribution of spherical powder in (b), and an SEM of the spherical metal powder-polymer matrix flexible film (c).
**Figure 4** illustrates optical micrographs of polished cross sections showing the geometry and density of samples with different defocusing distances (from zero to negative) and scanning speeds using a 120 µm thick spherical 304 stainless steel-polymer matrix flexible film.
Figure 5(a) illustrates the increase of height in percent of 304 stainless steel sample with defocus and scanning speed, compared with defocus of 0 mm; and **Figure 5(b)** illustrates the open window (or process operating window) for metal powder-polymer matrix flexible film printing with different scanning speeds and different defocus distances when using 120 µm thick metal powder-polymer matrix flexible film.
**Figure 6** shows an SEM observation of chemically etched 30-layer 304 stainless steel samples with different defocuses: (a) and (d) 0 mm defocus; (b) and (e) - 4 mm defocus; (c) and (f) -6 mm defocus.
**Figure 7** shows an SEM observation at the top surface of 304 stainless steel samples printed by different scanning speeds and defocus distances and using 120 µm thick metal powder-polymer matrix flexible film.
**Figure 8** shows optical micrographs of polished cross sections showing geometry and density of samples with different defocus distances and scanning speeds using a 200 µm thick 304 stainless steel metal powder-polymer matrix flexible film.

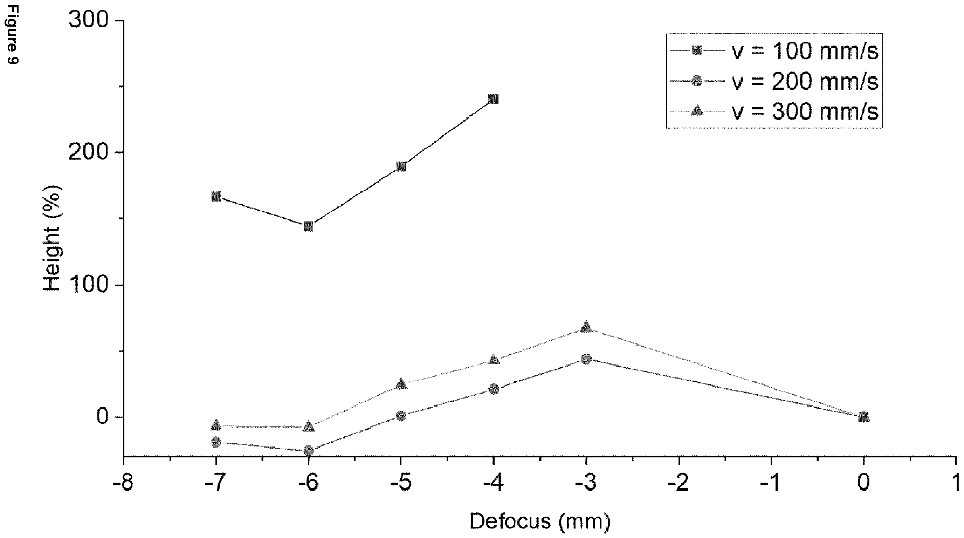

**Figure 9** shows a graph illustrating the percentage increase of build height with defocus distance and scanning speed, compared with a defocus of 0 mm when using a 200 µm thick 304 stainless steel powder-polymer matrix flexible film.
**Figure 10** is a graph showing the percentage increase of build height with defocus distance and scanning speed, compared with a defocus distance of 0 mm for Ti-6Al-4V material.
**Figure 11** is a graph showing the percentage increase of build height with a defocus distance and scanning speed, compared with a defocus distance of 0 mm, for Inconel 718 material.

### Detailed Description of the Drawings

### Materials and Methods

In the experiments described herein, the metal samples were manufactured by a commercial Realizer SLM50 system. With regards to the printing process, a metal powder-polymer matrix flexible film was placed directly above a steel build plate. Then the laser beam was switched on and scanned the metal powder-polymer matrix flexible film by following the predefined scanning path of the 3D model. During this metal powder-polymer matrix flexible film additive manufacturing process, the powder binder is evaporated due to its low melting temperature, and the metal powder is sintered when a laser beam is incident. After finishing the fabrication of one layer, the build platform moves down by one layer thickness and another metal powder-polymer matrix flexible film is placed on top surface of the previously manufactured material. Again the laser beam was switched on to manufacture the next layer. 3D samples were printed by repeating the above processes. The print was performed under an inert atmosphere.

### Preparation of metal binder sheets for 3D printing

Metal powder-polymer matrix flexible films (sheets) were fabricated by a solvent casting method using a doctor-blade coating technique, which produced a flexible sheet (film) with uniform thickness and smooth surface properties. The coating paste was prepared by dispersing metal particles into a stock polymer solution and casting the viscous solution over a selected substrate. An immobilized 90° bevelled razor blade was placed on a substrate and the metal powder-polymer solution was dispensed along the sidewall of the blade onto the substrate. The substrate was dragged by a motor at a controlled speed and the blade spread the metal powder-polymer solution uniformly on the substrate. After coating, the sample was left in a fume hood at atmospheric pressure for 2 hours to dry. (Note: this is for lab scale manufacturing of the sheets. On a large scale manufacturing process, the sheets would be dried instantaneously and rolled for ease of handling.) The thickness of the films can be easily controlled from microns to millimetres by adjusting the gap between the casting knife and the substrate.

### Printing a 3D Product

The printing of a 3D product can be carried out in a similar manner as described in the Materials and Methods section outlined above. (1) A 3D part is firstly produced in a computer-aided design (CAD) format. (2) A software program will generate the stereolithography (STL) (or equivalent) file for the part. This STL file contains the information required to instruct the printing machine to follow to produce the part. The STL file also contains information in relation to the number of layers the 3D part has been sub-divided into. The metal powder-polymer matrix film would have been made separately, and ready to be used. (3) After placing the first metal powder-polymer matrix film over a build plate, a laser (or electron beam) is used to de-bind the polymer matrix and to sinter and/or melt the metal powder to the layer bellow. (4) Then unused metal powder-polymer matrix film is then removed from the area. (5) The procedure is repeated for the required number of layers to form the 3D part. Automation of the process is envisioned by using, for example, rollers to move the polymer sheet, or multiple polymer sheets with multiple materials, and moved by robotic arms. The building direction can be vertical, horizontal or both. The building direction is vertical in conventional selective laser melting (SLM) and metal 3D Printing, but the vertical direction is not restricted to this in the current invention. It will in fact be possible to selectively decide the build direction by positioning the polymer sheet along the part in a particular orientation or on the part face that it is desired to build another layer(s). The current invention is also suitable to 3D print features onto existing parts that are not 3D printed. (6) Once the print is finished, the part will be mechanically removed from the build plate and can be finished with additional processes (if required).

### Beam Configuration

During the printing process described above, the focal spot of the laser beam is configured to converge beyond the metal powder-polymer matrix flexible film surface (typically from -0.5 to -30 mm; see **Figure 1**). Typically, the beam convergence point is between 1% of the metal powder-polymer matrix flexible film thickness and 30000% beyond the top surface (or exposed surface) of the metal powder-polymer matrix flexible film as shown in **Figure 1** (assuming the sheet is 0.1mm thick, the range can extend to a distance of 30mm from the top surface of the metal powder-polymer matrix flexible film.

### Results and Discussion

By adjusting the focal plane of a laser beam as above, it is possible to increase the production rate of a printing operation (when using metal powder-polymer matrix flexible films) by a range within 10% and 1500% of an equivalent print carried out with the focal plane at the material top surface location. The technique also works at variable and increasing laser scan velocities, typically from 50mm/s up to 3m/s.

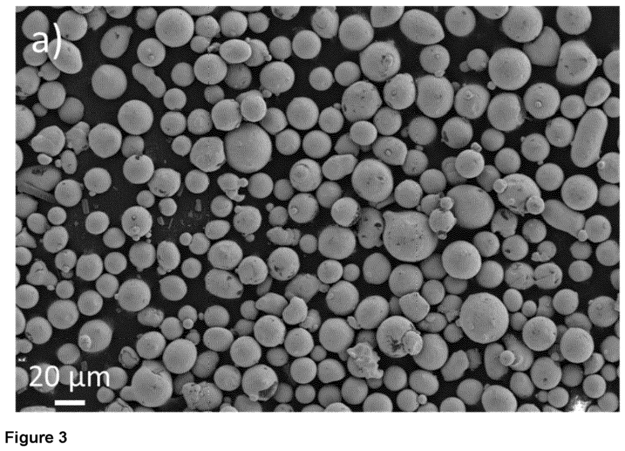

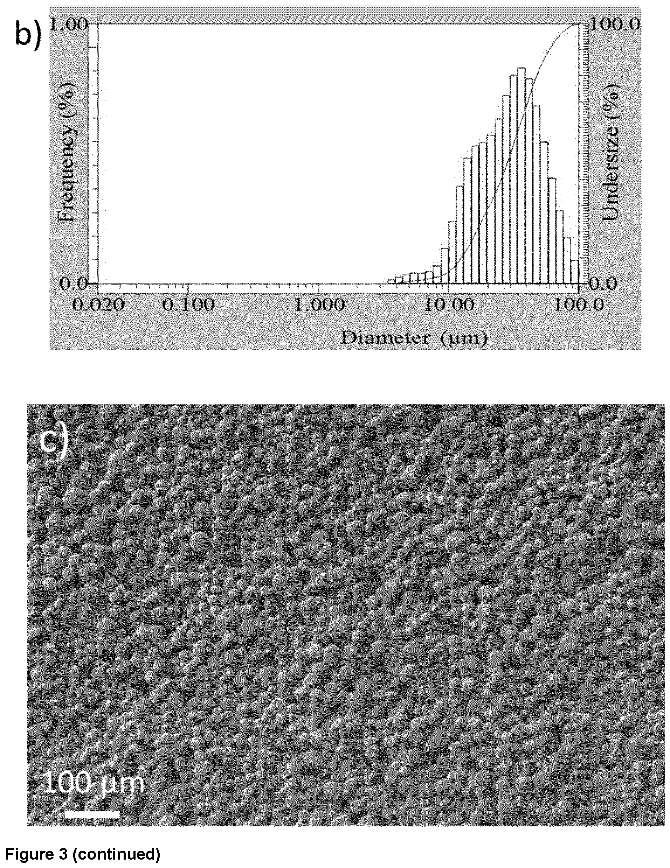

The characterisations of 304 stainless steel powder and metal powder-polymer matrix flexible film are shown in **Figure 3**. A cross section of a spherical 304 stainless steel metal powder-polymer matrix flexible film (measured thickness: 100 µm) printed samples by using different process parameters is shown in **Figure 4**. The complete process parameters are summarised in the Table 1.

**Table 1 Process parameters applied.**

| Material | 304 stainless steel, Ti-6Al-4V, Inconel 718 |
|---|---|
| Laser beam power (W) | 100 |
| Laser defocus (mm) | 0, -3, -4, -5, -6, -7 |
| Heat source spot diameter (µm)* | 70 |
| Laser scanning speed (mm/s) | 100, 200, 300, 500 |
| Hatch spacing (mm) | 0.1 |

| | |
|---|---|
| *in this instance, the heat source spot diameter of 70µm was selected. The heat source spot diameter can range from 1 mm to 400mm. | |

There are cracks formed at the cross section of samples printed by defocusing at 0 mm for all the three scanning speeds (100 mm/s, 300 mm/s and 500 mm/s), due to the higher laser surface energy density than other defocusing distances (-3 mm to -7 mm). At the defocus distance of 0 mm and -3 mm prints, an 'edge effect' appeared, which means that the edge of the sample is higher than that at the central area of the sample. When printing using defocusing distances from -4 mm to -7 mm, the 'edge effect' (i.e., the difference between the central area and the edges of the sample) is reduced (see **Figure 4**)**.**

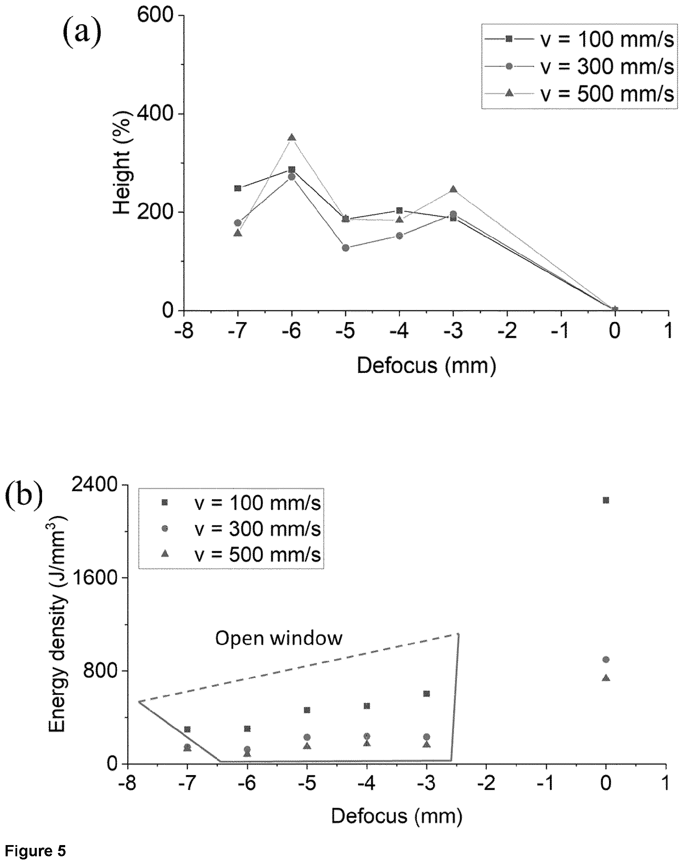

The productivity of metal powder-polymer matrix flexible film printing is process parameter-dependent and shown herein is that the layer thickness decreases with an increase in scanning speed in terms of overall trend, regardless of the defocusing distance applied (see **Figure 5(a)****-(b)** and Table 2). For instance, the solidified height of a sample printed using a -6 mm defocusing distance and at a scanning speed of 500 mm/s is 28.11% less than that of the 100 mm/s, as shown in Table 2. Significantly higher average layer thickness of samples is printed by defocusing distances of from -3 mm to -7 mm when compared to that of a focusing plane of 0 mm.

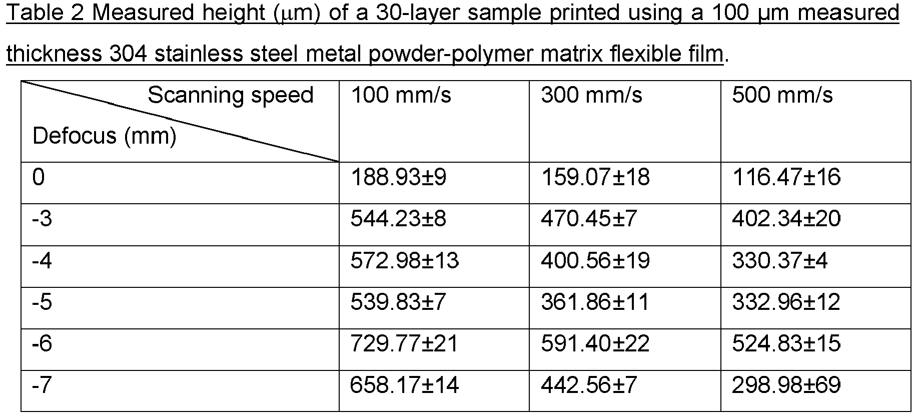

The density of printed metal samples varies with the process parameters such as defocusing distance (Δf) and scanning speed. The use of negative defocusing has shown significant effects on the density and geometric accuracy of metal powder-polymer matrix flexible film manufactured samples, caused by the different energy density distributions. When the defocusing distance is in the range of -4 mm to -6 mm, a high density (over 99.83 %) specimen without any cracks is obtained with a scanning speed in the range of 100 mm/s to 500 mm/s (see **Figure 4** and **Figure 5****).** When the defocusing distance is -7 mm, a specimen with a high density and without any cracks is obtained for the 100 mm/s scanning speed only. **Figure 4** in conjunction with **Figure 5** indicates that improving geometric accuracy is a benefit for improving the density of printed samples due to a better contact between the placed metal powder-polymer matrix flexible film for the next layer and the previously solidified material.

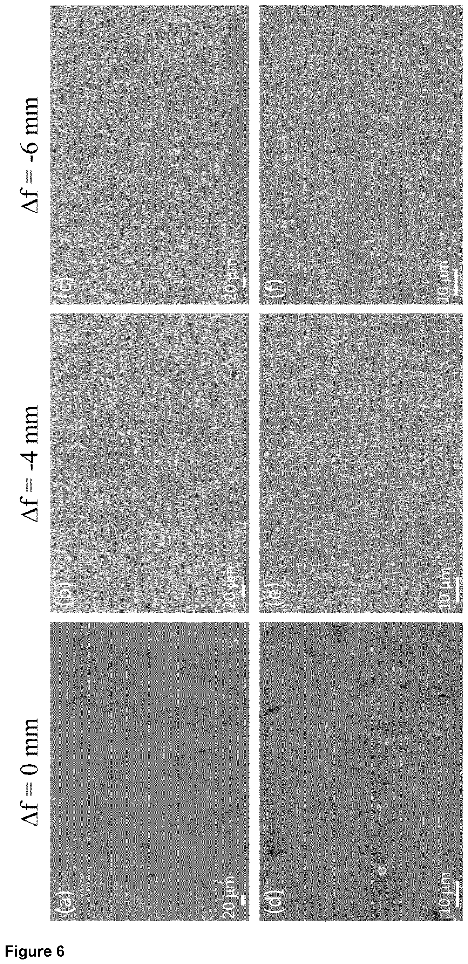

When using a negative defocusing strategy, the melt pool morphology transforms from the 'keyhole' mode to the conduction mode. When printing with a defocusing distance of 0 mm, keyhole mode laser beam melting was formed (the red line in **Figure 6(a)**). In comparison, when printing at negative defocusing distances (-4 mm and -6 mm), the melt pool became shallow and conduction mode melting occurred (see **Figure 6(b)** and **Figure 6(c)**), which resulted in better geometric accuracy (see **Figure 4**) and density of samples (see **Figure 5**). Therefore, the optimum metal powder-polymer matrix flexible film printing configuration is obtained using a negative defocusing distance.

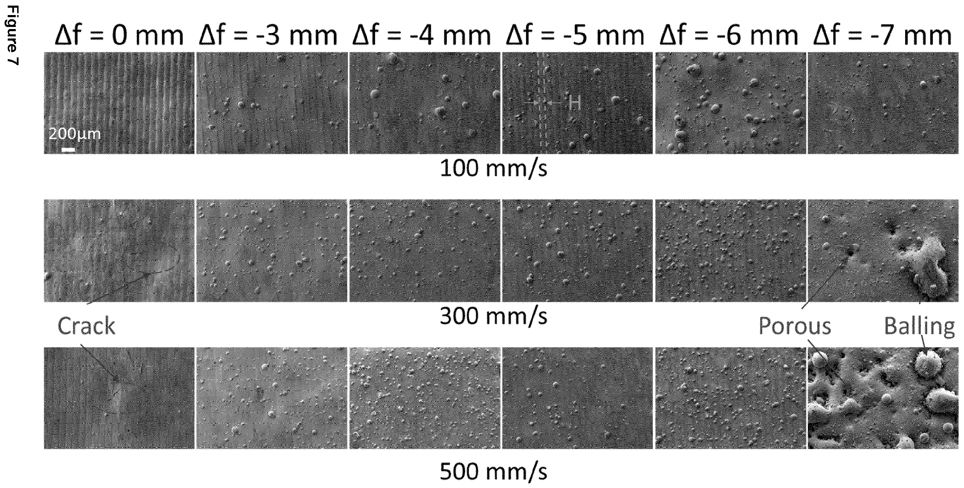

When printing by using no defocusing (Δf = 0 mm, neutral focusing), cracks are observed at the top surface of samples at scanning speeds of 300 mm/s and 500 mm/s (see **Figure 7**). The cracking is caused by a higher surface laser energy density when compared to using defocusing distances of -3 mm to -7 mm. When at a defocusing distance of -7 mm and at scanning speeds of 300 mm/s and 500 mm/s, pores and balling phenomena were formed due to lack of fusion (see **Figure 7**). When the defocusing distance is in the range of -4 mm to -6 mm, high density specimens without any cracks are obtained with a scanning speed in the range of 100 mm/s to 500 mm/s.

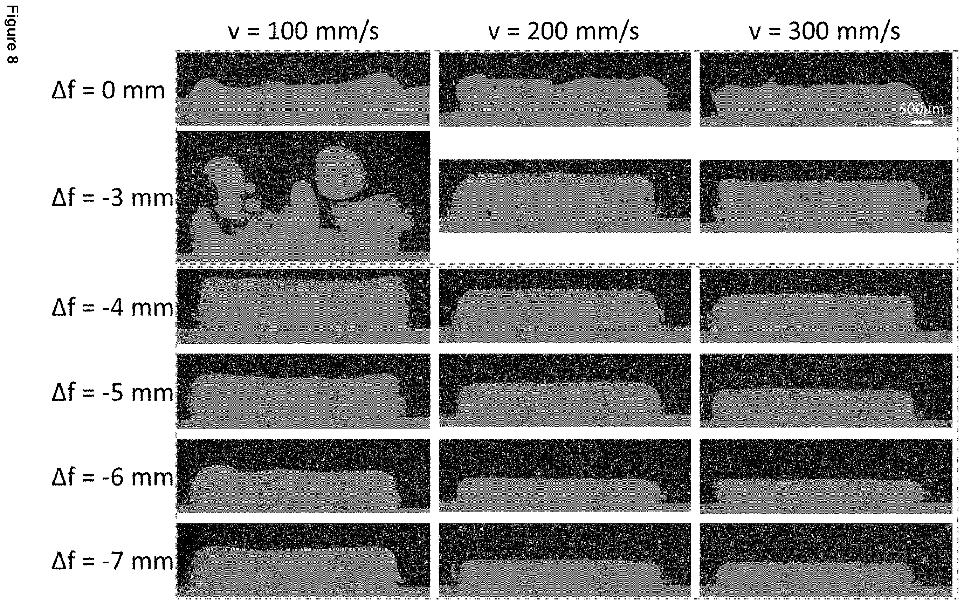

The claimed invention can be used to produce a controlled thickness of the printed layer(s) from a metal powder-polymer matrix flexible film by the process of additive manufacturing. The inventors have shown that the productivity (average layer thickness) not only increases with the increase of metal powder-polymer matrix flexible film thickness but is also depending on other parameters such as focus plane position, scanning speed and spot size. **Figure 8** shows a cross section of printed samples of thicker spherical 304 stainless steel metal powder-polymer matrix flexible film (theory thickness: 200 µm) when using different defocusing distances and laser beam scanning speeds. Samples acquiring nearly full density (over 99.34 % density) were printed using defocusing distances of -4 mm to -7 mm. Comparing the results set out in Table 3 (below) with Table 2 (above), it is clear that the average layer thickness increases with the increase of the thickness of metal powder-polymer matrix flexible film, defocus position and scanning speed.

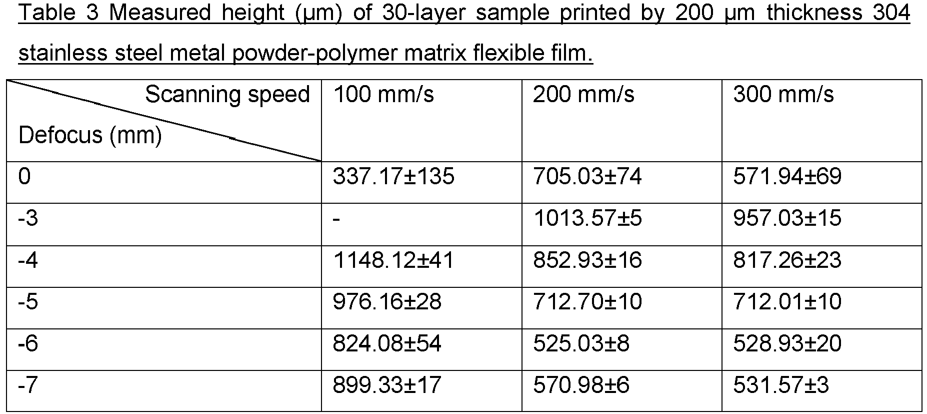

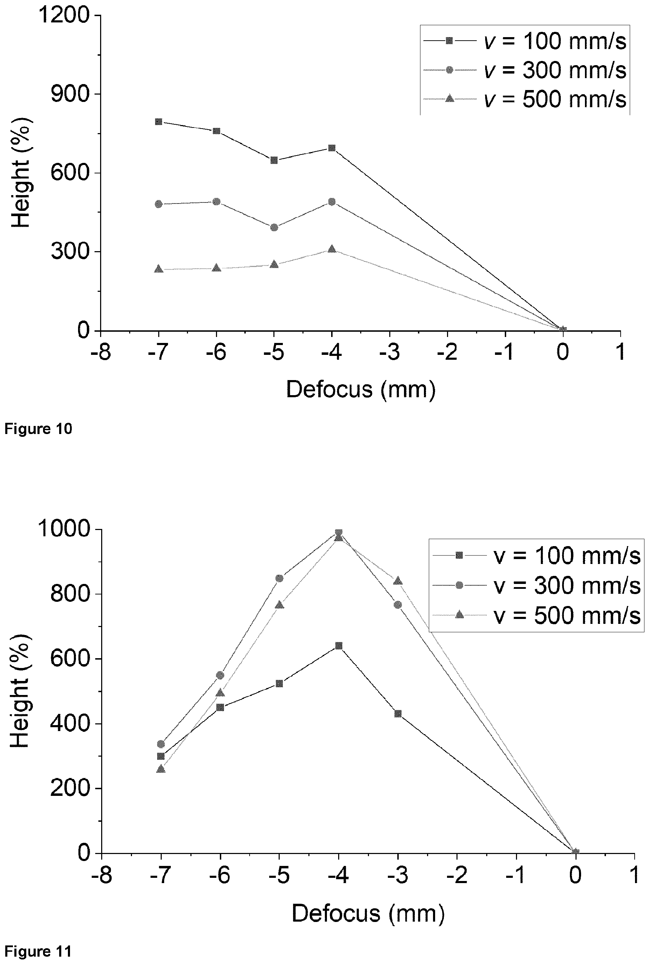

The improvement of the deposition rate by using the negative defocusing strategy and scanning speed also occurs when using Ti-6Al-4V and Inconel 718 powder materials. The increase of the printed Ti-6Al-4V and Inconel 718 sample's height at different defocusing distances and scanning speeds is shown in **Figure 10** and **Figure 11****,** respectively. For both materials, significant increases in the printed sample height is observed for the negative defocusing print when compared to that of the 0 mm defocusing distance (neutral print). In addition, the productivity of Ti-6Al-4V or Inconel 718 prints increases with the decreases in the scanning speed, which is consistent with the 304 stainless steel prints data (see Table 4 and Table 5).

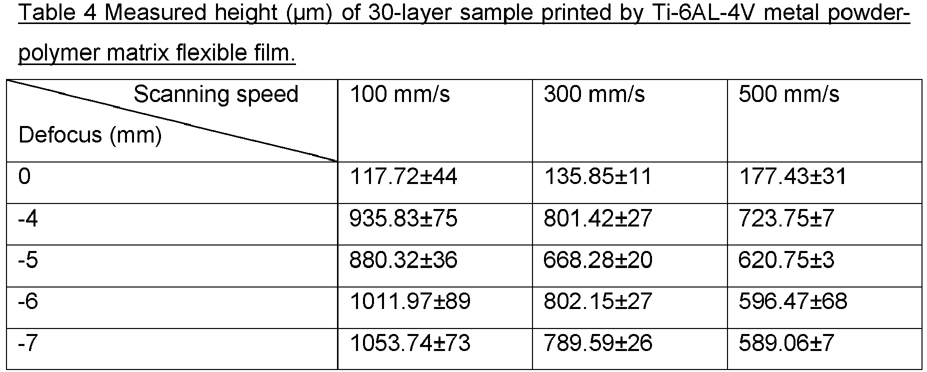

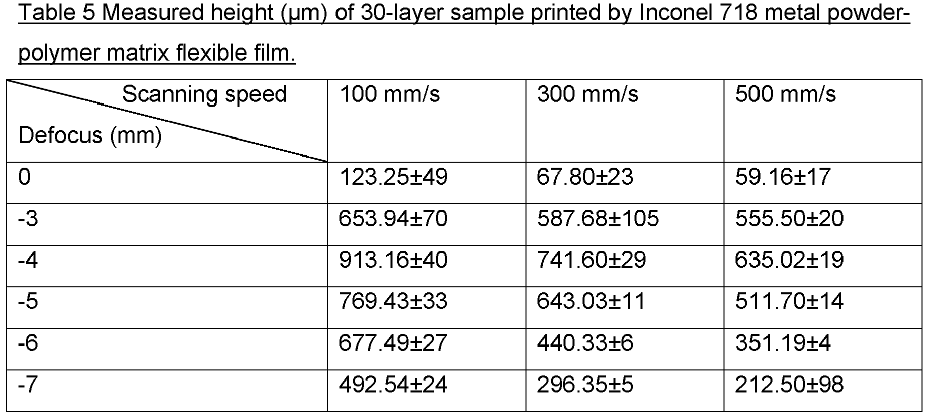

One of the problems addressed by the claimed invention is that the use of the process parameters as set out above (defocusing distance and scanning speed) when fabricating metal components results in improved material usage, energy density of the material produced, and also an increase in the average deposition rate of the solidified material.

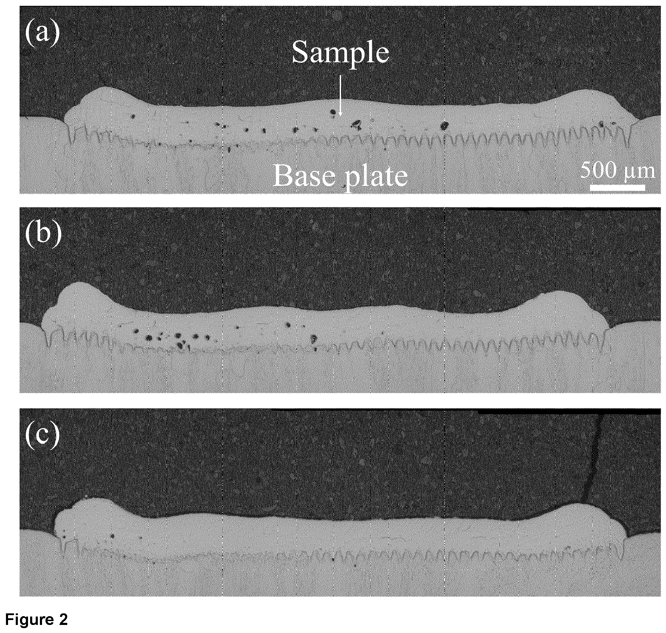

The methodologies used in loose powder (powder bed or powder blown) laser additive manufacturing to optimize production rates are not advantageous when using the "powder sheet" or "metal powder-polymer matrix flexible film" printing method. It is possible but not practical to change the sheet thickness to control the deposition characteristics, and the application of a "positive" defocus as in the paper by Metelkova *et al.* lead to worse results such as keyhole mode and 'edge effect', where the edge is higher than that at the central of sample, as shown in Figure 2.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiments hereinbefore described but may be varied in both construction and detail.

All publications, patents, patent applications and other references mentioned herein are hereby incorporated by reference in their entireties for all purposes as if each individual publication, patent or patent application were specifically and individually indicated to be incorporated by reference and the content thereof recited in full.

## Claims

1. A method for improving deposition of metal powder in a three-dimensional printing process, the method comprising:
(a) irradiating a metal powder-polymer matrix flexible film using a heat source to vaporise the polymer and melt the metal particles together to form a two-dimensional layer;
(b) placing the same or a new layer of the metal powder-polymer matrix flexible film on top of the previously formed two-dimensional layer; and
(c) repeating the steps (a) and (b) above for a number of cycles to produce a desired three dimensional product;
wherein the heat source has a focal plane that converges beyond the metal powder-polymer matrix flexible film.

2. The method of Claim 1, wherein the focal plane converges beyond the metal powder-polymer matrix flexible film at between about 1% to about 30000% of the thickness of the metal powder-polymer matrix flexible film.

3. The method of Claim 1 or Claim 2, wherein the focal plane converges beyond the metal powder-polymer matrix flexible film at between about 5% to about 10000% of the thickness of the metal powder-polymer matrix flexible film.

4. The method of any one of Claims 1 to 3, wherein the focal plane converges beyond the metal powder-polymer matrix flexible film at between about 10% to about 5000% of the thickness of the metal powder-polymer matrix flexible film.

5. The method of any one of Claims 1 to 4, wherein the focal plane is between about - 1.0 mm to about -10 mm beyond the metal powder-polymer matrix flexible film.

6. The method of any one of the preceding claims, wherein the heat source is selected from an infrared radiation device, a laser, an ion laser, an electron beam, an arc, or plasma.

7. The method of Claim 6, wherein the laser is selected from a CO₂ laser, a 1064 nm infrared Nd:YAG laser, an infrared fibre laser, a diode laser, an argon laser, a krypton laser, an argon/krypton laser, a helium-cadmium laser, a copper vapor laser, a xenon laser, an iodine laser, an oxygen laser, and an excimer laser.

8. The method of Claim 7, wherein the power output of the laser is greater than 1W.

9. The method of any one of the preceding claims, wherein the heat source scans the metal powder-polymer matrix flexible film at a velocity of between about 20mm/s to about 3m/s.

10. The method of any one of the preceding claims, wherein the metal powder-polymer matrix flexible film has a thickness of between about 20µm to about 500 µm.

11. The method of any one of the preceding claims, wherein the printing method is selected from the group comprising laser cladding, selective laser melting, selective laser sintering, wire cladding, Direct Energy Deposition (DED), ultrasonic additive manufacturing, and combinations thereof.

12. The method of any one of the preceding claims, wherein the process is performed at atmospheric pressure.

13. The method of any one of the preceding claims, wherein the process further comprises an additional step of irradiating the formed single layer at least once to vaporise any residual polymer that may be left over from the initial irradiation step.
